# EUROPÄISCHE PATENTSCHRIFT

(11) **EP 0 458 744 B1**
(45) Veröffentlichungstag und Bekanntmachung des Hinweises auf die Patenterteilung: **28.06.1995**
(21) Anmeldenummer: 91810363.1
(22) Anmeldetag: 10.05.1991
(51) Int. Cl.: C08F 222/40, C08L 71/12, C08G 73/12

(54) **Neue härtbare Bismaleinimid-Systeme**
Curable bismaleimid compositions
Compositions de bismaleimides durcissables

(30) Priorität: 21.05.1990 CH 1714/90
(43) Veröffentlichungstag der Anmeldung: 27.11.1991
(73) Patentinhaber: CIBA-GEIGY AG, 4002 Basel (CH)
(72) Erfinder: Brunner, Rudolf, Dr., CH-1782 Belfaux (CH); Stockinger, Friedrich, CH-1784 Courtepin (CH)

(56) Entgegenhaltungen:
- EP-A- 0 014 816
- EP-A- 0 327 497
- EP-A- 0 327 498
- EP-A- 0 385 937
- US-A- 4 100 140

## Beschreibung

Die vorliegende Erfindung betrifft Zusammensetzungen enthaltend Bismaleinimide, ein Alkenylphenol und/oder einen Alkenylphenolether und ein Copolyetherharz sowie Verfahren zur Herstellung gehärteter Produkte unter Verwendung der erfindungsgemässen Zusammensetzungen.

Die US-PS 4,100,140 beschreibt ein Verfahren zur Herstellung von Imidgruppen aufweisenden vernetzten Polymeren durch Umsetzung von Polymaleinimiden und Alkenylphenolen und/oder Alkenylphenolethern.
In der EP-A 327 498 werden härtbare Zusammensetzungen aus propenylsubstituierten Copolyetherharzen und Bismaleinimiden (BMI) beschrieben, die in der für Thermoplasten üblichen Weise eingesetzt und verarbeitet werden können und nach der Hartung die für Duroplaste charakteristischen Eigenschaften wie hohe Festigkeit und Glasübergangstemperatur aufweisen.

Aufgabe der vorliegenden Erfindung war es, BMI-Systeme bereitzustellen, welche höhere Zähigkeiten und hohe Glasübergangstemperaturen aufweisen und sich bei relativ niedrigen Temperaturen verarbeiten und härten lassen.

Gegenstand der vorliegenden Erfindung sind somit Zusammensetzungen enthaltend
a) mindestens ein Bismaleinimid der Formel I, 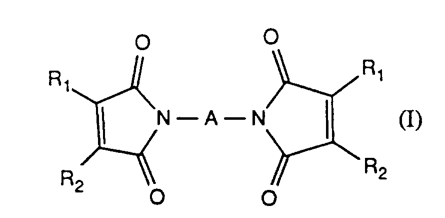 worin R₁ und R₂ unabhängig voneinander Wasserstoff oder Methyl bedeuten und A einen zweiwertigen organischen Rest mit 2 bis 30 C-Atomen darstellt,
b) mindestens ein ein- oder mehrkerniges Alkenylphenol, einen Alkenylphenolether oder deren Gemische, wobei die Alkenylgruppe mindestens drei C-Atome enthält.
c) ein Copolyetherharz mit direkt an Phenylkerne gebundenen Endgruppen -OR₃ und 1 bis 50 mol% an wiederkehrenden Struktureinheiten der Formel II und 50 bis 99 mol% an wiederkehrenden Struktureinheiten der Formel III, 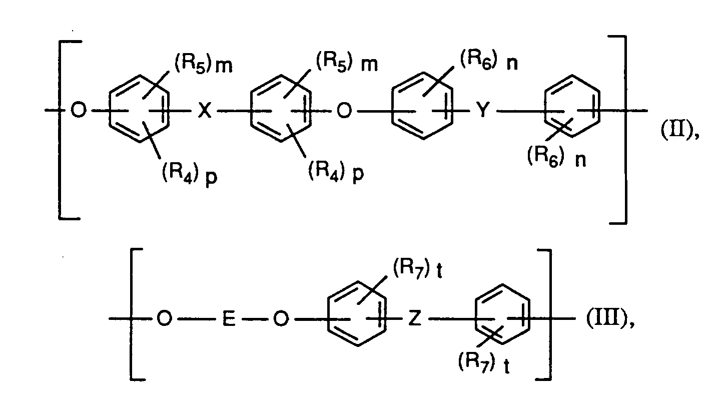
worin R₃ Wasserstoff ist oder einen der Reste der Formeln IV bis VII darstellt, 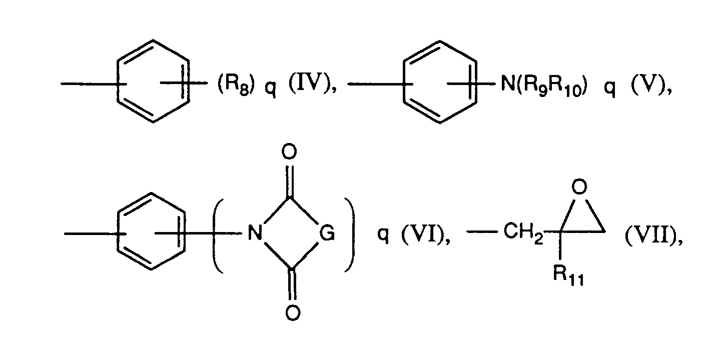
X eine direkte Bindung ist oder eine Gruppe der Formeln -CᵣH₂ᵣ-, -CH(C₆H₅)-, -C(CF₃)₂-, -S-, -SO-, -SO₂-, -O- oder -CO- bedeutet, r 1 bis 20 ist, R₄ Prop-1-enyl oder 2-Methylprop-1-enyl bedeutet, R₅, R₆ und R₇ unabhängig voneinander (C₁-C₄)-Alkyl, (C₁-C₄)-Alkoxy oder Chlor oder Brom sind, m, n und t unabhängig voneinander 0, 1 oder 2 bedeuten, p 1 oder 2 ist, E ein zweiwertiger unsubstituierter oder mit ein oder zwei (C₁-C₄)-Alkyl-, (C₁-C₄)-Alkoxygruppen oder Chlor- oder Bromatomen substituierter Rest eines Bisphenols nach dem Entfernen beider phenolischer Hydroxylgruppen ist, Y und Z unabhängig voneinander -CO- oder -SO₂- bedeuten, R₈ Vinyl, Ethinyl, Allyl, Methallyl, Prop-1-enyl oder 2-Methylprop-1-enyl bedeutet, R₉ und R₁₀ unabhängig voneinander Wasserstoff, Allyl oder Methallyl sind, R₁₁ Wasserstoff oder Methyl bedeutet, q 1 oder 2 ist, G eine Gruppe der Formeln VIII oder IX ist, 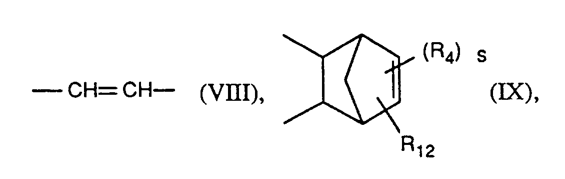
worin R₁₂ Wasserstoff oder Methyl ist und s 0, 1 oder 2 bedeutet.

Die Bismaleinimide der Formel I sind bekannte Verbindungen und sind beispielsweise in der US-PS 4,100,140 beschrieben.
Vorzugsweise handelt es sich um Verbindungen der Formel I, worin R₁ und R₂ Wasserstoff bedeuten.
Bevorzugte Bismaleinimide sind Verbindungen der Formel I, worin A -C₂H₂ᵤ- mit u gleich 2-20, Phenylen, Xylylen, Naphthylen, Cyclopentylen, 1,5,5-Trimethylcyclohexylen-1,3; Cyclohexylen-1,4; 1,4-Bis(methylen)cyclohexylen, den Rest des 4,4'-Bicyclohexylmethans oder eine Gruppe der Formel X bedeutet 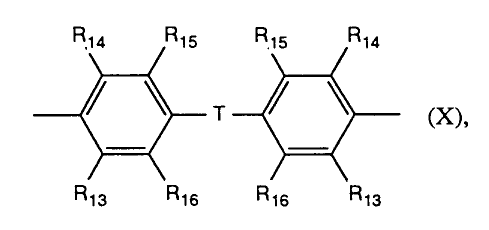
worin R₁₃ und R₁₄ gleich oder verschieden sind und jeweils Wasserstoff oder (C₁-C₄)-Alkyl bedeuten, R₁₅ und R₁₆ unabhängig voneinander je für ein Wasserstoff- oder Halogenatom stehen und T eine direkte Bindung, Methylen, 2,2-Propyliden, -S-, -SO-, -SO₂-, -O- oder -CO- darstellt.

Besonders bevorzugt sind Verbindungen der Formel I, worin A eine Gruppe der Formel X darstellt, worin R₁₃ und R₁₄ unabhängig voneinander Wasserstoff, Methyl oder Ethyl bedeuten, R₁₅ und R₁₆ Wasserstoff sind und T für Methylen steht.

Ganz besonders bevorzugt ist Methylen-bis-(phenylmaleinimid).

Natürlich können auch Mischungen von zwei oder mehr verschiedenen Bismaleinimiden zum Einsatz kommen.

Beispiele für Bismaleinimide der Formel I sind: N,N'-Ethylen-bismaleinimid, N,N'-Hexamethylen-bismaleinimid, N,N'-Trimethylhexylen-bismaleinimid, N,N'-m-Phenylen-bismaleinimid, N,N'-4,4'-Diphenylmethan-bismaleinimid, N,N'-4,4'-Diphenylether-bismaleinimid, N,N'-(1,5,5-Trimethylcyclohexylen-1,3)-bis-maleinimid, N,N-4,4'-Dicyclohexylmethan-bismaleinimid, N,N'-p-Xylylen-bismaleinimid, N,N'-4,4'-Di-(2-ethyl-6-methylphenyl)-methan-bismaleinimid, N,N'-4,4'-Di-(2,6-dimethylphenyl)-methan-bismaleinimid, N,N'-4,4'-Di-(2,6-diethylphenyl)-methan-bismaleinimid, N,N'-4,4'-Di-(2,6-diisopropylphenyl)-methan-bismaleinimid, N,N'-4,4'-Di-(2-ethyl-6-isopropylphenyl)-methan-bismaleinimid, N,N'-4,4'-Di-(3-chlor-2,6-diethylphenyl)-methan-bismaleinimid,

Die Herstellung der Verbindungen gemäss Formel I ist bekannt und erfolgt beispielsweise durch Umsetzung des gegebenenfalls substituierten Maleinsäureanhydrids mit den entsprechenden Diaminen. Uebliche Methoden sind in der GB-PS 1 137 592 beschrieben.

Alkenylphenole oder Alkenylphenolether sind bekannte Verbindungen und beispielsweise in der US-PS 4,100,140 beschrieben. Bevorzugt werden Verbindungen der Formel XI eingesetzt 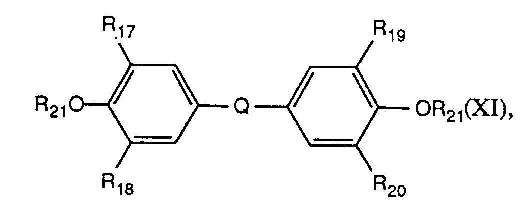
worin Q eine direkte Bindung, -CH₂-, -C(CH₃)₂-, -S-, -SO-, -SO₂-, -O- oder -CO- bedeutet, R₁₇, R₁₈, R₁₉ und R₂₀ unabhängig voneinander Wasserstoff oder (C₃-C₁₀)-Alkenyl bedeuten, wobei mindestens einer der Reste R₁₇ bis R₂₀ für eine Alkenylgruppe steht, und R₂₁ Wasserstoff, (C₁-C₁₀)-Alkyl, (C₆-C₁₀)-Aryl oder (C₃-C₁₀)-Alkenyl darstellt.

Als Alkenylgruppe enthalten die Verbindungen der Formel XI vorzugsweise eine Allyl-, Methallyl- oder

In den erfindungsgemässen Zusammensetzungen werden bevorzugt Verbindungen der Formel XI verwendet, worin Q für -CH₂-, -C(CH₃)₂-, -S-, -SO₂-, -O- oder -CO- steht, R₁₇ und R₁₉ jeweils Allyl, R₁₈ und R₂₀ jeweils Wasserstoff bedeuten und R₂₁ Wasserstoff ist.

Besonders bevorzugt sind Alkenylphenole der Formel XI, worin Q für -C(CH₃)₂- steht, R₁₇ und R₁₉ jeweils Allyl, R₁₈ und R₂₀ jeweils Wasserstoff bedeuten und R₂₁ Wasserstoff ist. Vorzugsweise werden Verbindungen der Formel XI eingesetzt, die pro Molekül zwei Alkenylgruppen enthalten.

Als Beispiele für Alkenylphenole bzw. Alkenylphenolether, welche in den erfindungsgemässen Zusammensetzungen einsetzbar sind, sind folgende Substanzen aufzuzählen:
o,o'-Diallyl-bisphenol-A,
o,o'-Diallyl-bisphenol-F,
4,4'-Dihydroxy-3,3'-diallyl-diphenyl,
4,4'-Diallyloxy-diphenyl
Ebenso sind die entsprechenden Methallylverbindungen verwendbar.

Alkenylphenole werden bekanntlich durch (thermische) Claisen-Umlagerung der Alkenylether von Phenolen hergestellt(siehe z.B. US-PS 4,100,140). Zu diesen Alkenylethern gelangt man ebenfalls nach bekannten Verfahren, beispielsweise durch Umsetzung von Phenolen mit Allylchlorid in Gegenwart von Alkalihydroxid.

Es können auch Gemische von Verbindungen, welche nur eine Hydroxylgruppe und nur eine Alkenylgruppe pro aromatischen Kern enthalten, mit Verbindungen, welche mehrere Hydroxylgruppen und/oder mehrere Alkenylgruppen pro aromatischen Kern aufweisen, oder Gemische der entsprechenden Phenylether dieser Verbindungen verwendet werden.

Die alkenylsubstituierten Copolyetherharze enthaltend wiederkehrende Struktureinheiten der Formeln II und III sind beispielsweise in der EP-A 327 498 beschrieben.

Vorzugsweise werden in den erfindungsgemässen Gemischen Polyethersulfone/ketone enthaltend wiederkehrende Sruktureinheiten der Formeln II und III, worin die Indices m, n und t Null sind und p und q 1 bedeuten, eingesetzt.

R₃ ist bevorzugt Wasserstoff oder ein Rest der Formel V, worin R₉ und R₁₀ jeweils Wasserstoff sind und q 1 bedeutet.

Die bevorzugte Bedeutung von X in der Formel II ist die direkte Bindung, -CH₂-, -CH(CH₃)-, -CH(C₆H₅)-, -C(CH₃)₂-, -C(CF₃)₂-,-S-, -SO-, -SO₂-, -O- oder -CO-.

Besonders bevorzugt ist X eine direkte Bindung, -CH₂- oder -C(CH₃)₂-.

Die bevorzugte Bedeutung von R₄ ist Prop-1-enyl.

Die Reste R₄ in der Formel II befinden sich vorzugsweise jeweils in ortho-Position zum phenolischen O-Atom.

Die Gruppe E ist als zweiwertiger Rest eines Bisphenols in der Regel der zweiwertige Rest eines ein- oder mehrkernigen carbocyclisch-aromatischen Phenols, insbesondere der Rest eines ein- oder zweikernigen carbocyclisch-aromatischen Phenols, wobei die beiden aromatischen Kerne kondensiert oder über eine Brückengruppe miteinander verbunden sind.

Bevorzugte Reste E entsprechen den Formeln XII bis XIV 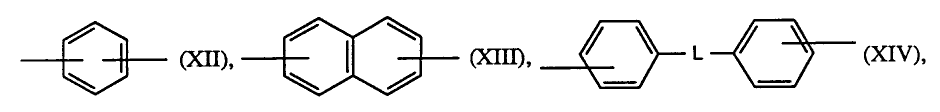
worin L eine direkte Bindung, eine Gruppe der Formeln -CᵣH₂ᵣ- (r= 1 bis 20), -CH(C₆H₅)-, -C(CF₃)₂-, -S-, -SO₂-, -O- oder -CO- oder eine Gruppe der Formeln XV oder XVI darstellt. 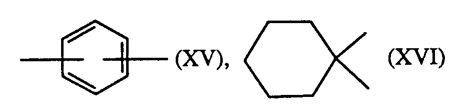
Ganz besonders bevorzugte Reste E entsprechen den Formeln XII, XIII oder XIV, worin L eine direkte Bindung oder eine Gruppe der Formeln -CH₂-, -CH(CH₃)-, -CH(C₂H₅)-, -C(CH₃)(C₂H₅)-, -C(CF₃)₂-, -S-, -SO₂- oder -CO- ist.

Y und Z haben vorzugsweise die gleiche Bedeutung.

Besonders bevorzugte Komponenten c) sind Copolyetherharze enthaltend 2 bis 30 mol% an wiederkehrenden Struktureinheiten der Formel II und 98 bis 70 mol% an wiederkehrenden Struktureinheiten der Formel III und mit einem mittleren Molekulargewicht (Zahlenmittel) von 2000 bis 30000, vorzugsweise von 5000 bis 20000.

Die erfindungsgemässen Zusammensetzungen enthalten vorzugsweise 5 - 100 Gew.%, besonders bevorzugt 10 - 50 Gew.%, der Komponente c) bezogen auf den Anteil der Komponente a).

Das molare Verhältnis der Komponenten b):a) beträgt vorzugsweise (0,5-1,4):1, insbesondere (0,7-1,2):1.

Die Härtung der erfindungsgemässen Zusammensetzungen erfolgt in bekannter Weise, z.B. bei Temperaturen zwischen 100 und 300°C während einer für die Härtung ausreichenden Zeit.

Der hier verwendete Ausdruck Härtung bedeutet daher die Umwandlung der niederviskosen Harzmischungen in unlösliche und nichtschmelzbare vernetzte Produkte. Es können so Hochleistungswerkstoffe hergestellt werden, wie z.B. (faserverstärkte) Verbundwerkstoffe, Strukturklebstoffe, Laminier- oder Elektroharze, die hohen Temperaturen ausgesetzt werden können.

Die erfindungsgemässen Zusammensetzungen können in jeder Verarbeitungsphase vor der Härtung mit den üblichen Modifizierungsmitteln gemischt werden, wie z.B. Streckmittel, Füllstoffe und Verstärkungsmittel, Pigmente, Farbstoffe, organische Lösungsmittel, Plastifizierungsmittel, Mittel zur Verbesserung der Trockenklebrigkeit (Klebrigmacher), Mittel zur Verbesserung der Zähigkeit (Toughener), Gummis, Beschleuniger, Flammschutzmittel oder Thixotropiemittel. Als übliche Zusatzstoffe kommen z.B. in Frage: Kohleteer, Bitumen, Glasfasern, Borfasern, Kohlefasern, Cellulose, Polyethylenpulver, Polypropylenpulver, Glimmer, Asbest, Quarzpulver, Gips, Antimontrioxid, Bentone, Siliciumdioxidaerogel("Aerosil"), Lithopon, Barit, Titandioxid, Russ, Graphit, Eisenoxid, Metallpulver wie z.B. Aluminium- oder Eisenpulver, Silicone, Celluloseacetatbutyrat, Polyvinylbutyrat, Wachse und Stearate.
Als zusätzliche Toughener eignen sich dem Fachmann bekannte Produkte, wie beispielsweise Polyimide (z.B Matrimid® 5218, Ciba-Geigy), Polyetherimide (z.B. Ultem® 1000, General Electric), Polyethersulfone oder -ketone (z.B. Victrex®, ICI oder Ultrason® E, BASF) oder Polyhydantoine.

Die erfindungsgemässen Zusammensetzungen zeichnen sich durch eine sehr gute Verarbeitbarkeit, gute Löslichkeit in üblichen organischen Lösungsmitteln, gute Stabilität in der Schmelze oder in Lösung sowie durch gute thermische und mechanische Eigenschaften der gehärteten Produkte aus. Die erhaltenen Produkte weisen eine verbesserte Zähigkeit und hohe Glasumwandlungstemperaturen auf.

Gegenstand der vorliegenden Erfindung ist auch ein Verfahren zur Herstellung gehärteter Produkte unter Verwendung der erfindungsgemässen Zusammensetzungen.

Die beschriebenen erfindungsgemässen Zusammensetzungen können auf verschiedenen Gebieten eingesetzt werden, wie z.B. in Prepregs, Laminaten, Verbundwerkstoffen, Leiterplatten, Giesslingen, Formkörpern, Klebstoffen und Ueberzügen. Von besonderem Interesse ist ihre Anwendung für die Herstellung von faserverstärkten Verbundwerkstoffen.

### Beispiel 1

In einem Rundkolben werden 75g o,o'-Diallylbisphenol-A auf 150 °C erhitzt und unter Rühren mit 10 g eines Copolyetherharzes, hergestellt gemäss Beispiel 1 aus EP-A 327 498, versetzt. Nachdem das Harz völlig gelöst ist (15 min), werden 100 g Methylen-bis-phenylmaleinimid unter Rühren zugegeben. Anschliessend wird das Gemisch weitere 15 min bei 125-130 °C gerührt, unter Wasserstrahlvakuum entgast und in eine 180 °C heisse Aluminiumform (4 mm) gegossen. Die Mischung wird 1h bei 180 °C, 2h bei 200 °C und schliesslich 6h bei 250 °C ausgehärtet. Das gehärtete Produkt hat folgende Eigenschaften:

| | |
|---|---|
| T_{g onset}: | 291°C |
| T_{g}: | 301°C |
| Biegefestigkeit (nach ISO 178): | 144 MPa |
| Randfaserdehnung (nach ISO 178): | 4,6 % |
| (T_{g onset} ist der Schnittpunkt der verlängerten Basislinie mit der Tangenten an die Messkurve im Bereich des steilsten Anstiegs (gemessen mit TMA, Mettler TA 3000)) | |

### Beispiel 2:

Analog zum im Beispiel 1 beschriebenen Verfahren wird ein gehärtetes Produkt aus 75 g o,o'-Diallylbisphenol-A, 20 g eines Copolyetherharzes, hergestellt gemäss Beispiel 1 aus EP-A 327 498, und 100 g Methylen-bis-phenylmaleinimid hergestellt, das folgende Eigenschaften aufweist:

| | |
|---|---|
| T_{g onset}: | 286°C |
| T_{g}: | 296°C |
| Biegefestigkeit (nach ISO 178): | 148 MPa |
| Randfaserdehnung (nach ISO 178): | 5,0 % |

### Beispiel 3:

Analog zum im Beispiel 1 beschriebenen Verfahren wird ein gehärtetes Produkt aus 75 g o,o'-Diallylbisphenol-A, 30 g eines Copolyetherharzes, hergestellt gemäss Beispiel 1 aus EP-A 327 498, und 100 g Methylen-bis-phenylmaleinimid hergestellt, das folgende Eigenschaften aufweist:

| | |
|---|---|
| T_{g onset}: | 282°C |
| T_{g}: | 292°C |
| Biegefestigkeit (nach ISO 178): | 161 MPa |
| Randfaserdehnung (nach ISO 178): | 5,5 % |

### Beispiel 4:

Analog zum im Beispiel 1 beschriebenen Verfahren wird ein gehärtetes Produkt aus 75 g o,o'-Diallylbisphenol-A, 10 g eines Copolyetherharzes, hergestellt gemäss Beispiel 2 aus EP-A 327 498, und 100 g Methylen-bis-phenylmaleinimid hergestellt, das folgende Eigenschaften aufweist:

| | |
|---|---|
| T_{g onset}: | 299°C |
| T_{g}: | 310°C |
| Biegefestigkeit (nach ISO 178): | 107 MPa |
| Randfaserdehnung (nach ISO 178): | 3,6 % |

### Beispiel 5:

Analog zum im Beispiel 1 beschriebenen Verfahren wird ein gehärtetes Produkt aus 75 g o,o'-Diallylbisphenol-A, 20 g eines Copolyetherharzes, hergestellt gemäss Beispiel 2 aus EP-A 327 498, und 100 g Methylen-bis-phenylmaleinimid hergestellt, das folgende Eigenschaften aufweist:

| | |
|---|---|
| T_{g onset}: | 300°C |
| T_{g}: | 310°C |
| Biegefestigkeit (nach ISO 178): | 159 MPa |
| Randfaserdehnung (nach ISO 178): | 5,5 % |

### Beispiel 6:

Analog zum im Beispiel 1 beschriebenen Verfahren wird ein gehärtetes Produkt aus 75 g o,o'-Diallylbisphenol-A, 30 g eines Copolyetherharzes, hergestellt gemäss Beispiel 2 aus EP-A 327 498, und 100 g Methylen-bis-phenylmaleinimid hergestellt, das folgende Eigenschaften aufweist:

| | |
|---|---|
| T_{g onset}: | 305°C |
| T_{g}: | 312°C |
| Biegefestigkeit (nach ISO 178): | 157 MPa |
| Randfaserdehnung (nach ISO 178): | 5,6 MPa |

### Beispiel 7:

Analog zum im Beispiel 1 beschriebenen Verfahren wird ein gehärtetes Produkt aus 75 g o,o'-Diallylbisphenol-A, 10 g eines Copolyetherharzes, hergestellt gemäss Beispiel 5 aus EP-A 327 498, und 100 g Methylen-bis-phenylmaleinimid hergestellt, das folgende Eigenschaften aufweist:

| | |
|---|---|
| T_{g onset}: | 304°C |
| T_{g}: | 312°C |
| Biegefestigkeit (nach ISO 178): | 162 MPa |
| Randfaserdehnung (nach ISO 178): | 5,8 % |

### Beispiel 8:

Analog zum im Beispiel 1 beschriebenen Verfahren wird ein gehärtetes Produkt aus 75 g o,o'-Diallylbisphenol-A, 20 g eines Copolyetherharzes, hergestellt gemäss Beispiel 5 aus EP-A 327 498, und 100 g Methylen-bis-phenylmaleinimid hergestellt, das folgende Eigenschaften aufweist:

| | |
|---|---|
| T_{g onset}: | 305°C |
| T_{g}: | 313°C |
| Biegefestigkeit (nach ISO 178): | 165 MPa |
| Randfaserdehnung (nach ISO 178): | 5,9 % |

### Beispiel 9:

Analog zum im Beispiel 1 beschriebenen Verfahren wird ein gehärtetes Produkt aus 75 g o,o'-Diallylbisphenol-A, 30 g eines Copolyetherharzes, hergestellt gemäss Beispiel 5 aus EP-A 327 498, und 100 g Methylen-bis-phenylmaleinimid hergestellt, das folgende Eigenschaften aufweist:

| | |
|---|---|
| T_{g onset}: | 305°C |
| T_{g}: | 312°C |
| Biegefestigkeit (nach ISO 178): | 167 MPa |
| Randfaserdehnung (nach ISO 178): | 6,6 % |

### Beispiel 10:

Analog zum im Beispiel 1 beschriebenen Verfahren wird ein gehärtetes Produkt aus 75 g o,o'-Diallylbisphenol-A, 50 g eines Copolyetherharzes, hergestellt gemäss Beispiel 5 aus EP-A 327 498, und 100 g Methylen-bis-phenylmaleinimid hergestellt, das folgende Eigenschaften aufweist:

| | |
|---|---|
| T_{g onset}: | 314°C |
| T_{g}: | 326°C |
| Biegefestigkeit (nach ISO 178): | 170 MPa |
| Randfaserdehnung (nach ISO 178): | 5,7 % |

### Beispiel 11:

Analog zum im Beispiel 1 beschriebenen Verfahren wird ein gehärtetes Produkt aus 60 g o,o'-Diallylbisphenol-A, 50 g eines Copolyetherharzes, hergestellt gemäss Beispiel 5 aus EP-A 327 498, und einer Mischung aus 50 g Methylen-bis-phenylmaleinimid und 50 g Methylen-bis-(2-ethyl-6-methylphenyl)maleinimid hergestellt, das folgende Eigenschaften aufweist:

| | |
|---|---|
| T_{g onset}: | 300°C |
| T_{g}: | 308°C |
| Biegefestigkeit (nach ISO 178): | 160 MPa |
| Randfaserdehnung (nach ISO 178): | 6,0 % |

### Beispiel 12:

20 g eines Copolyetherharzes, hergestellt gemäss Beispiel 5 aus EP-A 327 498, werden innerhalb 30 min unter Rühren bei 150 °C in 44 g o,o'-Diallylbisphenol-A gelöst. Anschliessend werden 22 g Bisphenol-A-diallylether und ein Gemisch aus 50 g Methylen-bis-phenylmaleinimid und 50 g Methylen-bis-(2-ethyl-6-methylphenyl)maleinimid zugegeben und für weitere 15 min bei 100°C gerührt. Das Reaktionsgemisch wird unter Vakuum (10 Torr) entgast und in eine 200°C heisse Aluminiumform (4 mm) gegossen. Die Mischung wird 1 h bei 200°C, 2 h bei 220°C und schliesslich 6 h bei 280°C ausgehärtet.
Das gehärtete Produkt weist folgende Eigenschaften auf:

| | |
|---|---|
| T_{g onset}: | 322°C |
| T_{g}: | 331°C |
| Biegefestigkeit (nach ISO 178): | 151 MPa |
| Randfaserdehnung (nach ISO 178): | 6,2 % |

## Patentansprüche

1. Zusammensetzungen enthaltend
a) mindestens ein Bismaleinimid der Formel I, 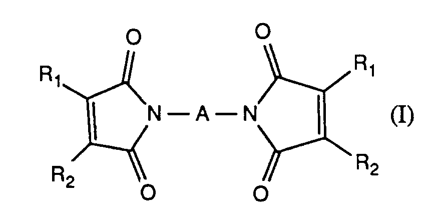 worin R₁ und R₂ unabhängig voneinander Wasserstoff oder Methyl bedeuten und A einen zweiwertigen organischen Rest mit 2 bis 30 C-Atomen darstellt,
b) mindestens ein ein- oder mehrkerniges Alkenylphenol, einen Alkenylphenolether oder deren Gemische, wobei die Alkenylgruppe mindestens drei C-Atome enthält.
c) ein Copolyetherharz mit direkt an Phenylkerne gebundenen Endgruppen -OR₃ und 1 bis 50 mol% an wiederkehrenden Struktureinheiten der Formel II und 50 bis 99 mol% an wiederkehrenden Struktureinheiten der Formel III, 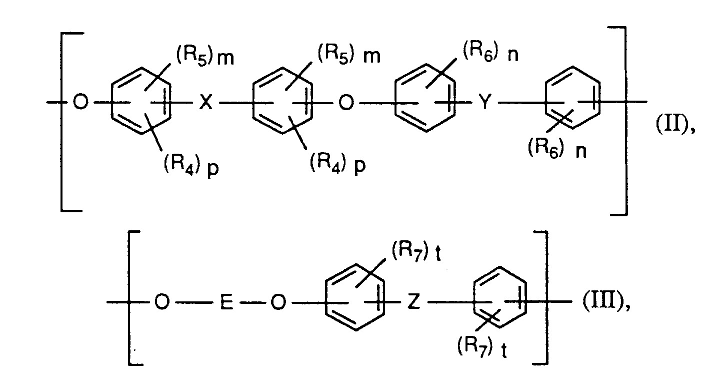 worin R₃ Wasserstoff ist oder einen der Reste der Formeln IV bis VII darstellt, 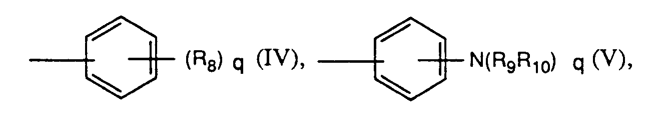 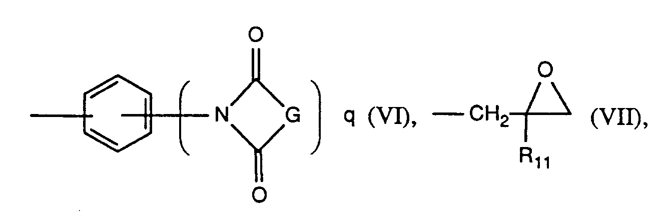 X eine direkte Bindung ist oder eine Gruppe der Formeln -CᵣH₂ᵣ-, -CH(C₆H₅)-, -C(CF₃)₂-, -S-, -SO-, -SO₂-, -O- oder -CO- bedeutet, r 1 bis 20 ist, R₄ Prop-1-enyl oder 2-Methylprop-1-enyl bedeutet, R₅, R₆ und R₇ unabhängig voneinander (C₁-C₄)-Alkyl, (C₁-C₄)-Alkoxy oder Chlor oder Brom sind, m, n und t unabhängig voneinander 0, 1 oder 2 bedeuten, p 1 oder 2 ist, E ein zweiwertiger unsubstituierter oder mit ein oder zwei (C₁-C₄)-Alkyl-, (C₁-C₄)-Alkoxygruppen oder Chlor- oder Bromatomen substituierter Rest eines Bisphenols nach dem Entfernen beider phenolischer Hydroxylgruppen ist, Y und Z unabhängig voneinander -CO- oder -SO₂- bedeuten, R₈ Vinyl, Ethinyl, Allyl, Methallyl, Prop-1-enyl oder 2-Methylprop-1-enyl bedeutet, R₉ und R₁₀ unabhängig voneinander Wasserstoff, Allyl oder Methallyl sind, R₁₁ Wasserstoff oder Methyl bedeutet, q 1 oder 2 ist, G eine Gruppe der Formeln VIII oder IX ist,
―CH=CH― (VIII), 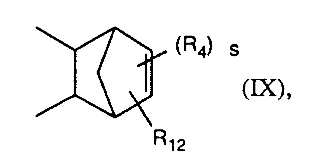
worin R₁₂ Wasserstoff oder Methyl ist und s 0, 1 oder 2 bedeutet.

2. Zusammensetzungen gemäss Anspruch 1, worin R₁ und R₂ Wasserstoff bedeuten.

3. Zusammensetzungen gemäss Anspruch 1 enthaltend Verbindungen der Formel I, worin A -CᵤH₂ᵤ- mit u gleich 2-20, Phenylen, Xylylen, Naphthylen, Cyclopentylen, 1,5,5-Trimethylcyclohexylen-1,3; Cyclohexylen-1,4; 1,4-Bis(methylen)cyclohexylen, den Rest des 4,4'-Bicyclohexylmethans oder eine Gruppe der Formel X bedeutet, 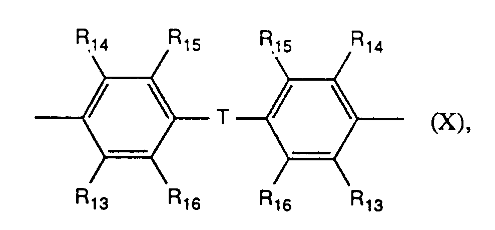 worin R₁₃ und R₁₄ gleich oder verschieden sind und jeweils Wasserstoff oder C₁-C₄-Alkyl bedeuten, R₁₅ und R₁₆ unabhängig voneinander je für ein Wasserstoff- oder Halogenatom stehen und T eine direkte Bindung, Methylen, 2,2-Propyliden, -S-, -SO-, -SO₂-, -O- oder -CO- darstellt.

4. Zusammensetzungen gemäss Anspruch 3, dadurch gekennzeichnet, dass A eine Gruppe der Formel X darstellt, worin R₁₃ und R₁₄ unabhängig voneinander Wasserstoff, Methyl oder Ethyl bedeuten, R₁₅ und R₁₆ Wasserstoff sind und T für Methylen steht.

5. Zusammensetzungen gemäss Anspruch 1, dadurch gekennzeichnet, dass die Verbindung der Formel I Methylen-bis-(phenylmaleinimid) ist.

6. Zusammensetzungen gemäss Anspruch 1, enthaltend als Komponente b) eine Verbindung der Formel XI 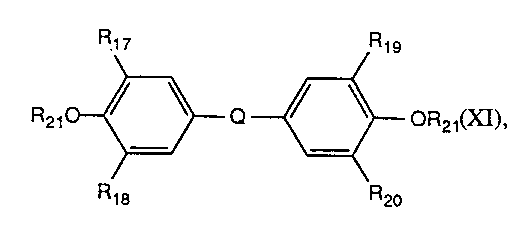 worin Q eine direkte Bindung, -CH₂-, -C(CH₃)₂-, -S-, -SO-, -SO₂-, -O- oder -CO- bedeutet, R₁₇, R₁₈, R₁₉ und R₂₀ unabhängig voneinander Wasserstoff oder (C₃-C₁₀)-Alkenyl bedeuten, wobei mindestens einer der Reste R₁₇ bis R₂₀ für eine Alkenylgruppe steht, und R₂₁ Wasserstoff, (C₁-C₁₀)-Alkyl, (C₆-C₁₀)-Aryl oder (C₃-C₁₀)-Alkenyl darstellt.

7. Zusammensetzungen gemäss Anspruch 6, worin in der Formel XI die Alkenylgruppe eine Allyl-, Methallyl- oder Propenylgruppe ist.

8. Zusammensetzungen gemäss Anspruch 6, worin Q für -CH₂-, -C(CH₃)₂-, -S-, -SO₂-, -O- oder -CO- steht, R₁₇ und R₁₉ jeweils Allyl, R₁₈ und R₂₀ jeweils Wasserstoff bedeuten und R₂₁ Wasserstoff ist.

9. Zusammensetzungen gemäss Anspruch 6,worin Q für -C(CH₃)₂- steht, R₁₇ und R₁₉ jeweils Allyl, R₁₈ und R₂₀ jeweils Wasserstoff bedeuten und R₂₁ Wasserstoff ist.

10. Zusammensetzungen gemäss Anspruch 1, worin die Indices m, n, und t Null sind und p und q 1 bedeuten.

11. Zusammensetzungen gemäss Anspruch 1, worin R₃ Wasserstoff ist oder ein Rest der Formel V, worin R₉ und R₁₀ jeweils Wasserstoff sind und q 1 bedeutet.

12. Zusammensetzungen gemäss Anspruch 1, worin X für eine direkte Bindung, -CH₂-, -CH(CH₃)-, -CH(C₆H₅)-, -C(CH₃)₂-, -C(CF₃)₂-,-S-, -SO-, -SO₂-, -O- oder -CO- steht.

13. Zusammensetzungen gemäss Anspruch 1, worin X für eine direkte Bindung, -CH₂- oder -C(CH₃)₂- steht.

14. Zusammensetzungen gemäss Anspruch 1, worin R₄ für Prop-1-enyl steht.

15. Zusammensetzungen gemäss Anspruch 1, worin sich die Reste R₄ in der Formel II jeweils in ortho-Position zum phenolischen O-Atom befinden.

16. Zusammensetzungen gemäss Anspruch 1, worin E eine Gruppe der Formeln XII bis XIV ist, 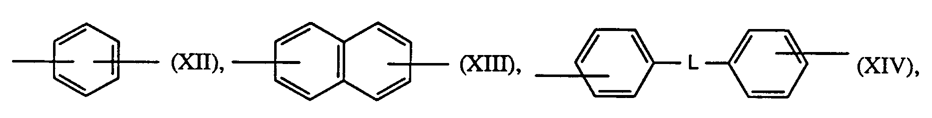 worin L eine direkte Bindung, eine Gruppe der Formeln -CᵣH₂ᵣ- (r= 1 bis 20), -CH(C₆H₅)-, -C(CF₃)₂-, -S-, -SO₂-, -O- oder -CO- oder eine Gruppe der Formeln XV oder XVI darstellt,

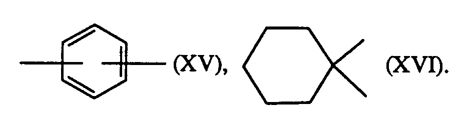

17. Zusammensetzungen gemäss Anspruch 16, worin E eine Gruppe der Formeln XII, XIII oder XIV darstellt, worin L eine direkte Bindung oder eine Gruppe der Formeln -CH₂-, -CH(CH₃)-, -CH(C₂H₅)-, -C(CH₃)(C₂H₅)-, -C(CF₃)₂-, -S-, -SO₂- oder -CO- ist.

18. Zusammensetzungen gemäss Anspruch 1, worin Y und Z die gleiche Bedeutung haben.

19. Zusammensetzungen gemäss Anspruch 1, enthaltend als Komponente c) Copolyetherharze bestehend aus 2 bis 30 mol% an wiederkehrenden Struktureinheiten der Formel II und 98 bis 70 mol% an wiederkehrenden Struktureinheiten der Formel III und mit einem mittleren Molekulargewicht (Zahlenmittel) von 2000 bis 30000, vorzugsweise von 5000 bis 20000.

20. Zusammensetzungen gemäss Anspruch 1, enthaltend 5 - 100 Gew.%, bevorzugt 10 - 50 Gew.%, der Komponente c) bezogen auf den Anteil der Komponente a).

21. Zusammensetzungen gemäss Anspruch 1, worin das molare Verhältnis der Komponenten b):a) gleich (0,5-1,4):1 ist, bevorzugt (0,7-1,2):1.

22. Verfahren zur Herstellung gehärteter Produkte unter Verwendung der Zusammensetzungen gemäss Anspruch 1.

## Claims

1. A composition comprising
a) at least one bismaleimide of formula I 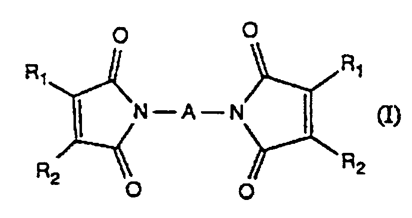 wherein R₁ and R₂ are each independently of the other hydrogen or methyl and A is a divalent organic radical of 2 to 30 carbon atoms,
b) at least one mononuclear or polynuclear alkenylphenol, an alkenylphenol ether or a mixture thereof, wherein the alkenyl group contains at least three carbon atoms,
c) a copolyether resin containing end groups -OR₃ attached direct to phenyl nuclei and 1 to 50 mol% of structural repeating units of formula II and 50 to 99 mol% of structural repeating units of formula III 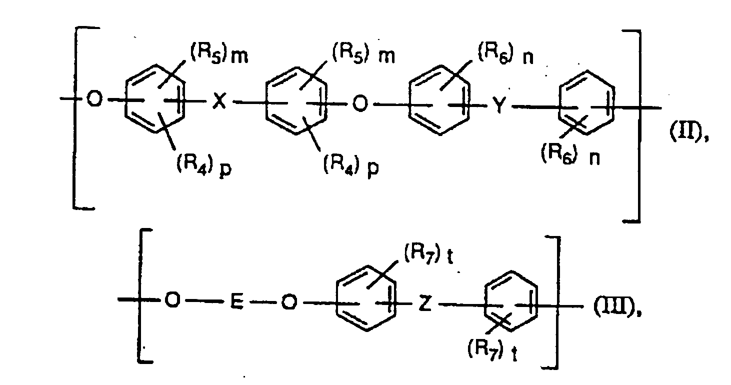 wherein R₃ is hydrogen or one of the radicals of formulae IV to VII 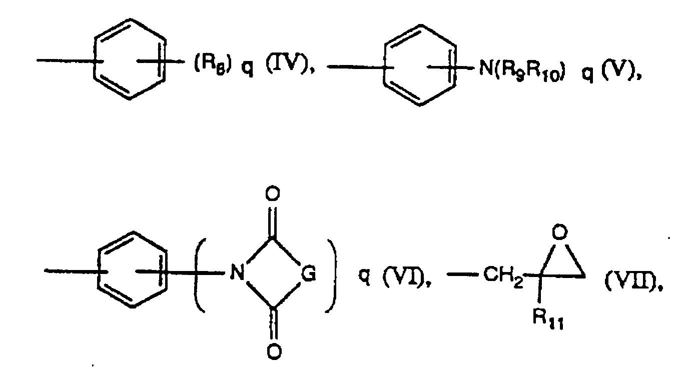 X is a direct bond or a group of formulae -CᵣH₂ᵣ-, -CH(C₆H₅)-, -C(CF₃)₂-, -S-, -SO-, -SO₂-, -O- or -CO-, r is 1 to 20, R₄ is prop-1-enyl or 2-methylprop-1-enyl, R₅, R₆ and R₇ are each independently of one another C₁-C₄alkyl, C₁-C₄alkoxy or chloro or bromo, m, n and t are each independently of one another 0, 1 or 2, p is 1 or 2, E is a divalent radical of a bisphenol after removal of both phenolic hydroxyl groups, which radical is unsubstituted or substituted by one or two C₁-C₄alkyl or C₁-C₄alkoxy groups or one or two chlorine or bromine atoms, Y and Z are each independently of the other -CO- or -SO₂-, R₈ is vinyl, ethynyl, allyl, methallyl, prop-1-enyl or 2-methylprop-1-enyl, R₉ and R₁₀ are each independently of the other hydrogen, allyl or methallyl, R₁₁ is hydrogen or methyl, q is 1 or 2, G is a group of formula VIII or IX,
―CH=CH― (VIII), 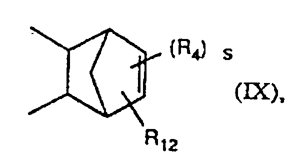
wherein R₁₂ is hydrogen or methyl and s is 0, 1 or 2.

2. A composition according to claim 1, wherein R₁ and R₂ are hydrogen.

3. A composition according to claim 1, comprising a compound of formula I wherein A is -C₂H₂ᵤ-, in which u is 2-20, phenylene, xylylene, naphthylene, cyclopentylene, 1,5,5-trimethylcyclohexyl-1,3-ene; cyclohexyl-1,4-ene; 1,4-bis(methylene)cyclohexylene, the radical of 4,4'-bis(cyclohexyl)methane or a group of formula X, 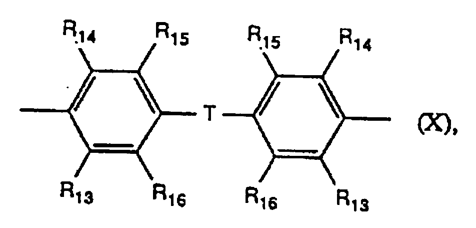 wherein R₁₃ and R₁₄ are identical or different and are each hydrogen or C₁-C₄alkyl, R₁₅ and R₁₆ are each independently of the other a hydrogen or halogen atom, and T is a direct bond, methylene, 2,2-propylidene, -S-, -SO-, -SO₂-, -O- or -CO-.

4. A composition according to claim 3, wherein A is a group of formula X in which R₁₃ and R₁₄ are each independently of the other hydrogen, methyl or ethyl, R₁₅ and R₁₆ are hydrogen and T is methylene.

5. A composition according to claim 1, wherein the compound of formula I is methylenebis(phenylmaleimide).

6. A composition according to claim 1 comprising as component b) a compound of formula XI 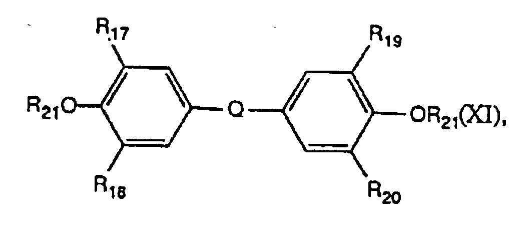 wherein Q is a direct bond, -CH₂-, -C(CH₃)₂-, -S-, -SO-, -SO₂-, -O- or -CO-, R₁₇, R₁₈, R₁₉ and R₂₀ are each independently of one another hydrogen or C₃-C₁₀alkenyl, and at least one of R₁₇ to R₂₀ is an alkenyl group, and R₂₁ is hydrogen, C₁-C₁₀alkyl, C₆-C₁₀aryl or C₃-C₁₀alkenyl.

7. A composition according to claim 6, wherein the alkenyl group in formula XI is an allyl, methallyl or propenyl group.

8. A composition according to claim 6, wherein Q is -CH₂-, -C(CH₃)₂-, -S-, -SO₂-, -O- or -CO-, R₁₇ and R₁₉ are each allyl, R₁₈ and R₂₀ are each hydrogen and R₂₁ is hydrogen.

9. A composition according to claim 6, wherein Q is -C(CH₃)₂-, R₁₇ and R₁₉ are each allyl, R₁₈ and R₂₀ are each hydrogen and R₂₁ is hydrogen.

10. A composition according to claim 1, wherein the indices m, n and t are zero, and p and q are 1.

11. A composition according to claim 1, wherein R₃ is hydrogen or a radical of formula V in which R₉ and R₁₀ are each hydrogen and q is 1.

12. A composition according to claim 1, wherein X is a direct bond, -CH₂-, -CH(CH₃)-, -CH(C₆H₅)-, -C(CH₃)₂-, -C(CF₃)₂-, -S-, -SO-, -SO₂-, -O-or -CO-.

13. A composition according to claim 1, wherein X is a direct bond, -CH₂-or -C(CH₃)₂-.

14. A composition according to claim 1, wherein R₄ is prop-1-enyl.

15. A composition according to claim 1, wherein the radicals R₄ in formula II are each in the ortho-position to the phenolic -O- atom.

16. A composition according to claim 1, wherein E is a group of formulae XII to XIV 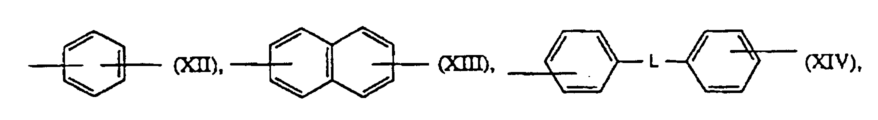 in which L is a direct bond, a group of formulae -CᵣH₂ᵣ- (r= 1 to 20), -CH(C₆H₅)-, -C(CF₃)₂-, -S-, -SO₂-, -O- or -CO-, or is a group of formula XV or XVI

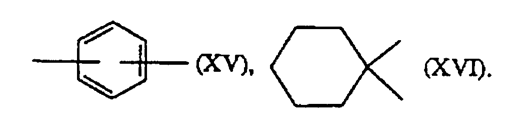

17. A composition according to claim 16, wherein E is a group of formulae XII, XIII or XIV, in which L is a direct bond or a group of formula -CH₂-, -CH(CH₃)-, -CH(C₂H₅)-, -C(CH₃)(C₂H₅)-, -C(CF₃)₂-, -S-, -SO₂-or -CO-.

18. A composition according to claim 1, wherein Y and Z have the same meaning.

19. A composition according to claim 1 comprising as component c) a copolyether resin composed of 2 to 30 mol% of structural repeating units of formula II and 98 to 70 mol% of structural repeating units of formula III and having an average molecular weight (number average) of 2000 to 30 000, preferably 5000 to 20 000.

20. A composition according to claim 1, which contains 5-100 % by weight, preferably 10-50 % by weight, of component c), based on the amount of component a).

21. A composition according to claim 1, wherein the molar ratio of component b):a) is (0.5-1.4):1, preferably (0.7-1.2):1.

22. A process for the preparation of cured products using a composition according to claim 1.

## Revendications

1. Compositions contenant
a) au moins un bismaléinimide de formule I 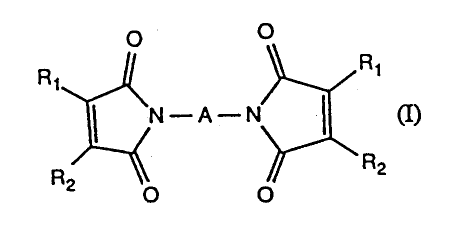 où R₁ et R₂, indépendamment l'un de l'autre, représentent hydrogène ou méthyle et A un radical organique bivalent avec 2 à 30 atomes de C,
b) au moins un alcénylphénoléther, un alcénylphénol mono- ou polycyclique, ou leurs mélanges, le groupe alcényle contenant au moins 3 atomes de C,
c) une résine copolyéther avec des groupes terminaux -OR₃ liés directement au noyau phényle et 1 à 50 moles-% d'unités de structure répétitives de formule II et de 50 à 90 moles-% d'unités de structure répétitives de formule III 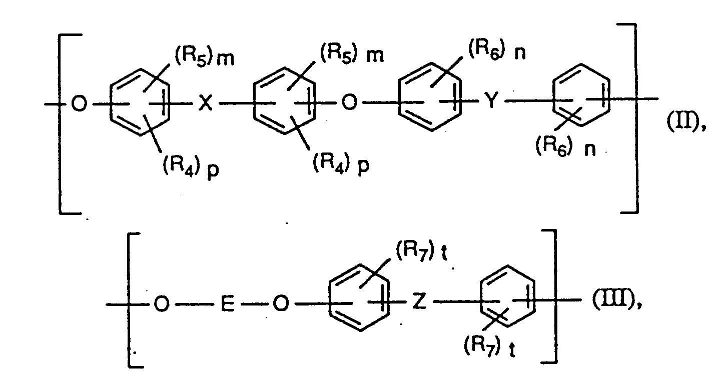 où R₃ est hydrogène ou un des radicaux de formules IV à VII 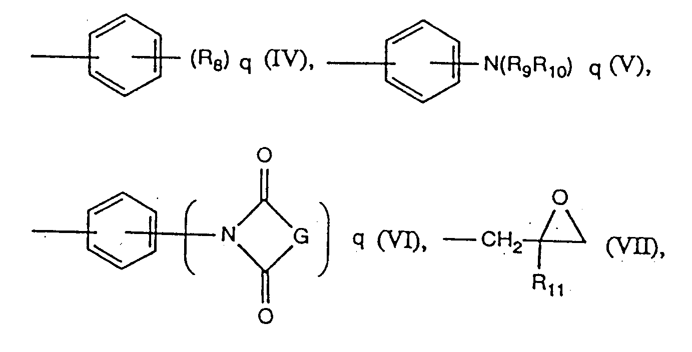 X représente une liaison directe ou un groupe de formules -CᵣH₂ᵣ, -CH(C₆H₅)-, -C(CF₃)₂-, -S-, -SO-, -SO₂-, -O- ou -CO-, r va de 1 à 20, R₄ représente le prop-1-ényle ou le 2-méthylprop-1-ényle, R₅, R₆ et R₇, indépendamment l'un de l'autre, représentent alkyle en C₁-C₄, alcoxy en C₁-C₄ ou chlore ou brome, m, n et t, indépendamment l'un de l'autre, valent 0, 1 ou 2, p vaut 1 ou 2, E représente un radical bivalent non substitué ou substitué par un ou deux groupes alkyle en C₁-C₄, alcoxy en C₁-C₄ ou des atomes de chlore ou de brome d'un bisphénol après l'élimination des deux groupes hydroxyles de phénol, Y et Z indépendamment l'un de l'autre représente -CO- ou -SO₂-, R₈ représente vinyle, éthynyle, allyle, méthallyle, prop-1-ényle ou 2-méthylprop-1-ényle, R₉ et R₁₀, indépendamment l'un de l'autre, représentent hydrogène, allyle ou méthallyle, R₁₁ représente hydrogène ou méthyle, q vaut 1 ou 2, G représente un groupe de formules VIII ou IX
―CH=CH― (VIII), 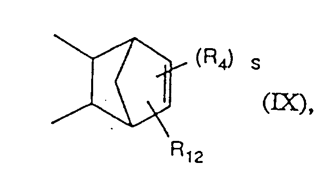
dans laquelle R₁₂ représente hydrogène ou méthyle et s vaut 0, 1 ou 2.

2. Compositions selon la revendication 1 dans lesquelles R₁ et R₂ représentent hydrogène.

3. Compositions selon la revendication 1 contenant des composés de formule I où A représente -C₂H₂ᵤ- avec u égal à 2 à 20, phénylène, xylylène, naphtylène, cyclo-pentylène, 1,5,5-triméthylcyclohexylène-1,3, cyclohexylène-1,4, 1,4-bis-(méthylène)-cyclohexylène, le radical du 4,4'-bicyclohexylméthane ou un groupe de formule X 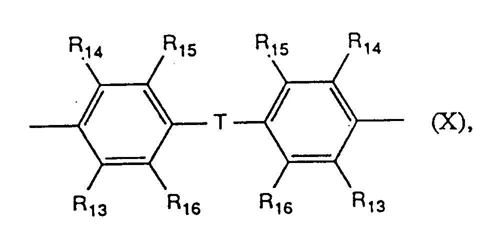 dans laquelle R₁₃ et R₁₄ sont identiques ou différents et chaque fois représentent hydrogène ou alkyle en C₁-C₄, R₁₅ et R₁₆, indépendamment l'un de l'autre, représentent chacun un atome d'hydrogène ou d'halogène et T représente une liaison directe, méthylène, 2,2-propylidène, -S-, -SO-, -SO₂-, -O- ou -CO-.

4. Compositions selon la revendication 3, caractérisées en ce que A représente un groupe de formule X, dans laquelle R₁₃ et R₁₄, indépendamment l'un de l'autre, représentent hydrogène, méthyle ou éthyle, R₁₅ et R₁₆ sont hydrogène et T représente méthylène.

5. Compositions selon la revendication 1, caractérisée en ce que le composé de formule I est le méthylène-bis-(phénylmaléinimide).

6. Compositions selon la revendication 1 contenant en tant que composant b) un composé de formule XI 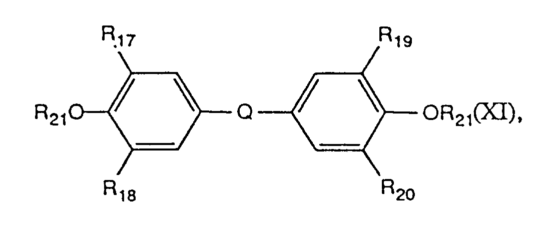 dans laquelle Q représente une liaison directe, -CH₂-, -C(CH₃)₂-, -S-, -SO-, -SO₂-, -O- ou -CO-, R₁₇, R₁₈, R₁₉ et R₂₀, indépendamment l'un de l'autre, représentent hydrogène ou alcényle en C₃-C₁₀, au moins l'un des radicaux R₁₇ à R₂₀ représentant un groupe alcényle et R₂₁ représentant hydrogène, alkyle en C₁-C₁₀, aryle en C₆-C₁₀ ou alcényle en C₃-C₁₀.

7. Compositions selon la revendication 6, dans lesquelles dans la formule XI le groupe alcényle est un groupe allyle, méthallyle ou propényle.

8. Compositions selon la revendication 6, dans lesquelles Q représente -CH₂-, -C(CH₃)₂-, -S-, -SO₂-, -O- ou -CO-, R₁₇ et R₁₉ représentent chacun allyle, R₁₈ et R₂₀ représentent chacun hydrogène et R₂₁ est hydrogène.

9. Compositions selon la revendication 6, dans lesquelles Q représente -C(CH₃)₂-, R₁₇ et R₁₉ représentent chacun allyle, R₁₈ et R₂₀ représentent chacun hydrogène et R₂₁ est hydrogène.

10. Compositions selon la revendication 1 dans lesquelles les indices m, n et t sont 0 et p et q valent 1.

11. Compositions selon la revendication 1 dans lesquelles R₃ est hydrogène ou un radical de formule V, dans laquelle R₉ et R₁₀ représentent chacun hydrogène et q vaut 1.

12. Compositions selon la revendication 1 dans lesquelles X représente une liaison directe, -CH₂-, -CH(CH₃)-, -CH(C₆H₅)-, -C(CH₃)₂-, C(CF₃)₂-, -S-, -SO-, -SO₂-, -O- ou -CO-.

13. Compositions selon la revendication 1, dans lesquelles X représente une liaison directe, -CH₂-, -C(CH₃)₂-.

14. Compositions selon la revendication 1, dans lesquelles R₄ est le prop-1-ényle.

15. Compositions selon la revendication 1, dans lesquelles les radicaux R₄ dans la formule II chacun est en position ortho par rapport à l'atome de O de phénol.

16. Compositions selon la revendication 1, dans lesquelles E représente un groupe de formules XII à XIV 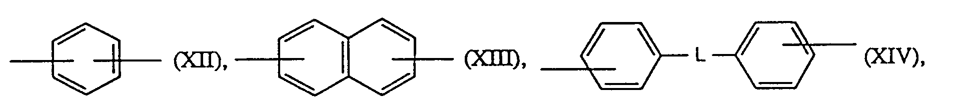 où L représente une liaison directe, un groupe de formules -CᵣH₂ᵣ- (r = 1 à 20), -CH(C₆H₅)-, -C(CF₃)₂-, -S-, -SO₂-, -O-ou -CO- ou un groupe de formules XV ou XVI.

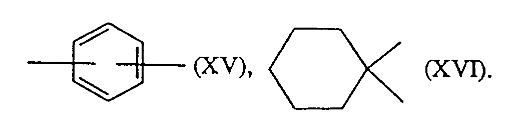

17. Compositions selon la revendication 16, où E représente un groupe de formules XII, XIII ou XIV, dans lesquelles L représente une liaison directe ou un groupe de formules -CH₂-, -CH(CH₃)-, -CH(C₂H₅)-, -C(CH₃)(C₂H₅)-, -C(CF₃)₂-, -S-, -SO₂- ou -CO-.

18. Compositions selon la revendication 1, où Y et Z ont la même signification.

19. Compositions selon la revendication 1, contenant en tant que composant c) des résines copolyéther composées de 2 à 30 moles-% d'unités de structure répétitives de formule II et de 98 à 70 moles-% d'unités de structure répétitives de formule III et ayant un poids moléculaire moyen (moyenne en nombre) de 2000 à 30000, de préférence de 5000 à 20000.

20. Compositions selon la revendication 1, contenant de 5 à 100% en poids, de préférence de 10 à 50% en poids du composant c) par rapport au taux du composant a).

21. Compositions selon la revendication 1, où le rapport molaire des composants b):a) est égal à (0,5-1,4):1, de préférence (0,7-1,2):1.

22. Procédé pour la préparation de produits durcis en utilisant les compositions selon la revendication 1.
